# EUROPÄISCHE PATENTSCHRIFT

(11) **EP 0 829 678 B1**
(45) Veröffentlichungstag und Bekanntmachung des Hinweises auf die Patenterteilung: **26.09.2001**
(21) Anmeldenummer: 97112806.1
(22) Anmeldetag: 25.07.1997
(51) Int. Cl.: F23D 14/20, F24H 3/04, F23D 14/58

(54) **Kanalbrenner und Verfahren zum Aufheizen eines strömenden Gases**
Burner and method of heating a flowing gas
Brûleur et procédé pour réchauffer un flux gazeux

(30) Priorität: 16.08.1996 DE 19633004
(43) Veröffentlichungstag der Anmeldung: 18.03.1998
(73) Patentinhaber: BBP Energy GmbH, 46049 Oberhausen (DE)
(72) Erfinder: Oppenberg, Rolf, 46483 Wesel (DE); Lux, Thomas, 46499 Hamminkeln (DE)
(74) Vertreter: Radünz, Ingo, Dipl.-Ing.

(56) Entgegenhaltungen:
- EP-A- 0 031 206
- FR-A- 1 321 385
- FR-A- 1 416 121
- FR-A- 1 438 977
- GB-A- 1 370 844
- US-A- 3 649 211

## Beschreibung

Die Erfindung betrifft einen Kanalbrenner und ein Verfahren zum Aufheizen eines in einem Kanal strömenden Gases mit den Merkmalen des Oberbegriffes der Ansprüche 1 und 16.

Ein Kanalbrenner zur Aufheizung eines Gases unter Verbrennung eines Brenngases mit zusätzlicher Luft gemäß dem Oberbegriff des Anspruches 1 ist aus der EP-A-0 031 206 bekannt. Bei diesem bekannten Kanalbrenner ist die Zuströmung der Luft so ausgeführt, daß eine intensive Vermischung von Brenngas und Luft stattfindet. Auf diese Weise soll eine stabile Verbrennung erreicht werden. Andererseits steigt aber auch durch die intensive Vermischung der Verbrennungspartner miteinander der Gehalt an Stickoxiden in dem Verbrennungsgas an.

Der Erfindung liegt die Aufgabe zugrunde, einen gattungsgemäßen Kanalbrenner so zu gestalten, daß eine stabile, aber emissionsarme Verbrennung möglich wird.

Diese Aufgabe wird bei einem gattungsgemäßen Kanalbrenner erfindungsgemäß durch die kennzeichnenden Merkmale des Anspruches 1 gelöst. Ein Verfahren ist in dem Anspruch 16 angegeben. Vorteilhafte Ausgestaltungen sind Gegenstand der Unteransprüche.

Dadurch, daß bei dem erfindungsgemäßen Kanalbrenner die Verbrennungsluft in einem Abstand von dem zentral aufgegebenen Brenngas längs und quer zu dessen Strömungsrichtung aufgegeben wird, wird erreicht, daß die Verbrennungsluft beiderseits der Längsachse des rechteckigen Brenners einen nach innen gerichteten Wirbel mit einer verringerten Luftzahl und einem Anteil an teilverbranntem Gas erzeugt. Dieser-Innenwirbel mischt sich in die austretenden Gasstrahlen ein und verringert in dem Brenngas die brennbaren Bestandteile. Diese Verringerung der brennbaren Bestandteile und die verspätete Luftaufgabe vermindern die Bildung von NOₓ. Gleichzeitig wird, ebenfalls bedingt durch den Innenwirbel, eine stabile Verbrennung und der Ausbrand der brennbaren Bestandteile erzielt. Damit sich der Innenwirbel ausbilden kann, muß die Luft mit einem bestimmten Impuls eingeblasen werden. Dieser Impuls wird dadurch erzeugt, daß die Luft durch einen besonders dimensionierten Schlitz in den Brennraum des Kanalbrenners eingeblasen wird.

Mehrere Ausführungsbeispiele der Erfindung sind in der Zeichnung dargestellt und werden im folgenden näher erläutert.

Es zeigen
- Fig. 1: einen Längsschnitt durch einen Strömungskanal mit einem Kanalbrenner,
- Fig. 2: den Schnitt II-II nach Fig. 1 im vergrößerten Maßstab,
- Fig. 3 bis 8: den Schnitt II-II nach Fig. 1 für unterschiedliche Ausführungsformen eines Einzelbrenners des Kanalbrenners.

Kanalbrenner werden direkt in den aufzuheizenden, durch einen Kanal 1 strömenden Gasstrom eingebaut und setzen sich aus einer Vielzahl von Einzelbrennern zusammen. Die Einzelbrenner werden zu sogenannten Kanalbrennerrampen zusammengefaßt.

Je nach der Größe des Querschnittes des von dem aufzuheizenden Gas durchströmten Kanals 1 werden mehrere Kanalbrennerrampen in diesen Kanal 1 eingebaut. Durch horizontale und/oder vertikale Anordnung der aneinander gekoppelten Einzelbrenner kann man auch ein gitterförmiges Netz bilden, in dem ein Überzünden der Flamme beim Start mit Hilfe eines einzigen Zündbrenners und einer einzigen Flammenüberwachung von einer Stelle aus möglich ist. Genauso werden auch voneinander getrennte Kanalbrennerrampen über jeweils eine Zündbrenner und eine Flammenüberwachung abgesichert.

Das aufzuheizende Gas kann das Abgas einer Gasturbine oder eines stationären Verbrennungsmotors sein. Es kann sich auch um Rauchgas aus einer Gasreinigungsanlage handeln, das vor einer Weiterbehandlung wieder aufgewärmt werden muß. Weiterhin kann feuchte Luft aus einer Trocknungsanlage vorliegen, die durch Aufheizen zu entfeuchten ist. Insgesamt gesehen, kann das aufzuheizende Gas folgende Parameter aufweisen:

| | |
|---|---|
| Sauerstoffgehalt | 0 bis 21 Vol.% |
| Wasserdampfgehalt | 0 bis 40 Vol.% |
| Temperatur | -50 bis 700 °C |

Bei zu niedrigen Sauerstoffgehalten des aufzuheizenden Gases bzw. auch bei zu niedriger Anströmgeschwindigkeit eines Gasstromes wird über einen gegenüber dem Kanal 1 geschlossenen durchgehenden Luftkasten 2 den Einzelbrennern der Kanalbrennerrampe Luft zugeführt. Die Luft dient zur Verbrennung eines Brenngases und gleichzeitig zum später beschriebenen erfindungsgemäßen Antrieb eines nach innen gerichteten Wirbels. Die Luft kann auch aus einem über ein Druckerhöhungsgebläse geförderten Anteil des aufzuheizenden Gases bestehen oder zur weiteren Absenkung des NOₓ-Gehaltes mit rezirkuliertem Rauchgas/Abgas des Abgaskamins vermischt werden.

Der Kanalbrenner weist vorzugsweise einen rechteckigen Querschnitt auf und ist mit dem gegenüber dem Kanal 1 geschlossenen, durchgehenden Luftkasten 2 und einem sich an den Luftkasten 2 anschließenden Brennraum 3 versehen. Der Brennraum 3 ist durch Seitenwände 4 begrenzt und von dem Luftkasten 2 durch einen Brennerboden 5 getrennt, in dem später näher beschriebene Luftdurchlaßöffnungen angeordnet sind. Der Luftkasten 2 ist mit einer außerhalb des Kanals 1 liegenden Luftzuführung 6 verbunden.

Durch den Luftkasten 2 ist ein Gasführungsrohr 7 geführt, das mit einer außerhalb des Kanals 1 liegenden Gaszuführung 8 für ein Brenngas verbunden ist. Als Brenngas können Erdgas, Koksgas, Wasserstoff, Raffineriegase oder Flüssiggase verwendet werden. Innerhalb des Luftkastens 2 ist an das Gasführungsrohr 7 rechtwinklig zu der Längsachse des Gasführungsrohres 7 eine Reihe von Gaszuführungsstutzen 9 angeschlossen. Jeder Gaszuführungsstutzen 9 ist zu einem Gasverteiler 10 geführt, von dem ein oder mehrere, im vorliegenden Fall zwei, mit Gasaustrittsöffnungen versehene Gasaustrittsrohre 11 ausgehen. Die Gasaustrittsrohre 11 verlaufen parallel zu den Seitenwänden des Brennraumes 3.

Der Brennerboden 5 ist gasdicht mit der Außenwand der Gasaustrittsrohre 11 verbunden und oberhalb der Gasaustrittsrohre 11 vorzugsweise kreisbogenförmig gewölbt. Dabei ist zwischen den Gasaustrittsrohren 11 und dem gewölbten Teil des Brennerbodens 5 ein Zwischenraum gebildet, in den das aus den Gasaustrittsöffnungen ausströmende Gas eintritt. Der gewölbte Teil des Brennerbodens 5 bildet eine Gasdüse 12, die mit in den Brennraum 3 mündenden Düsenbohrungen 13 versehen ist. Der durchgehende Brennraum 3 des Kanalbrenners ist in mehrere Einzelbrenner 14 aufgeteilt, denen jeweils ein Gaszuführungsstutzen 9 mit den dazugehörenden Gasaustrittsrohren 11 zugeordnet ist.

Die den Luftkasten 2 mit dem Brennraum 3 verbindenden Luftdurchlaßöffnungen sind als Schlitze 15 ausgebildet und verlaufen parallel zu den Seitenwänden 4 des Brennraumes 3. Diese Schlitze 15 sind mit seitlichem Abstand von den Gasdüsen 12 in der Nähe der den Brennraum 3 begrenzenden Seitenwände 4 angeordnet. Der Austrittsquerschnitt der Schlitze 15 liegt in Strömungsrichtung des Brenngases hinter den Gasdüsen 12. Zu diesem Zweck springt der außenliegende Bereich des Brennerbodens 5 in den Brennraum 3 vor und bildet einen Endabschnitt, der zusammen mit den Seitenwänden des Brennraumes 3 den Schlitz 15 begrenzt. Die aus dem Schlitz 15 austretende Luft strömt bei dieser Ausführungsform entlang den Seitenwänden in den Brennraum 3 ein.

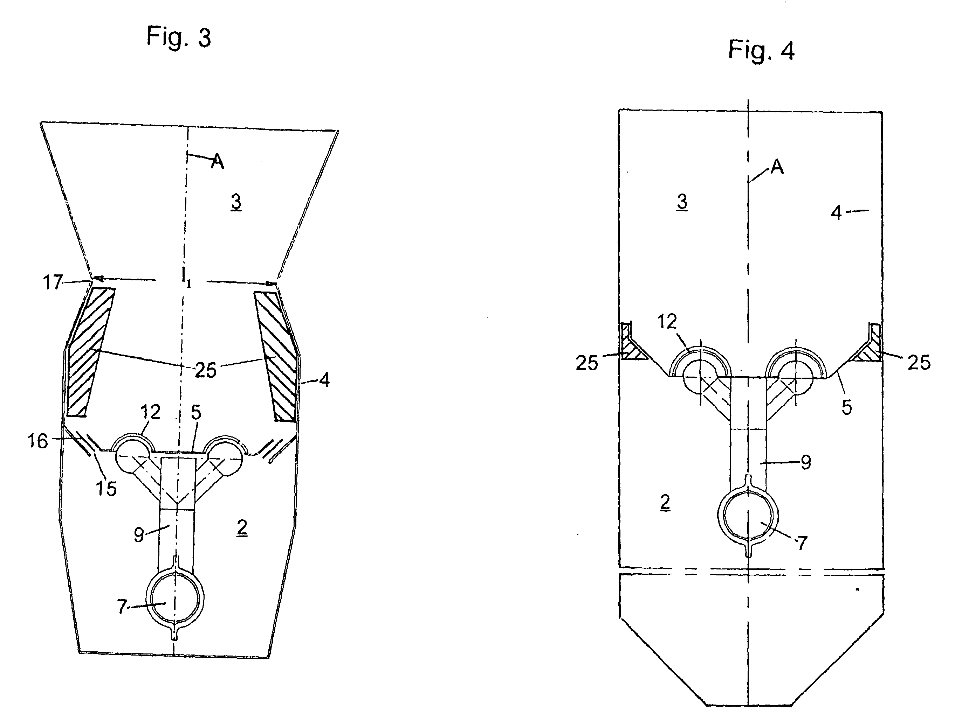

Die Schlitze 15 können auch in dem Brennerboden 5 angeordnet werden. Dabei können die Schlitze 15 nach außen (Fig. 3) in den Brennraum 3 hin ausgerichtet sein. Der Schlitz 15 kann auch, wie in der Fig. 3 angedeutet, durch eine Trennwand 16, die sich in Längsrichtung des Schlitzes 15 erstreckt, in zwei parallele Teilschlitze aufgeteilt werden. Anstelle einer Trennwand 16 können auch mehrere Trennwände vorgesehen werden. Der Schlitz 15 sorgt für eine Führung der austretenden Luft über eine gewisse Strecke und in die gewünschte Richtung.

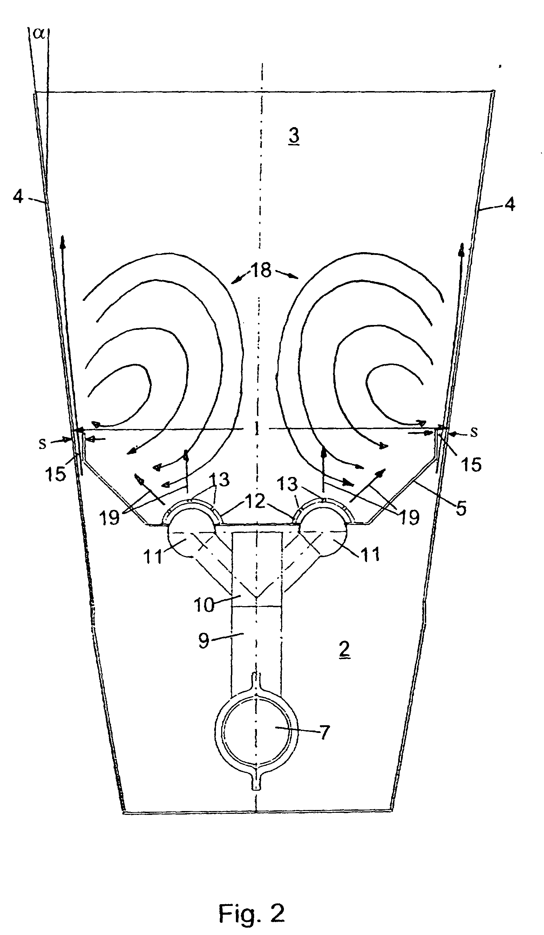

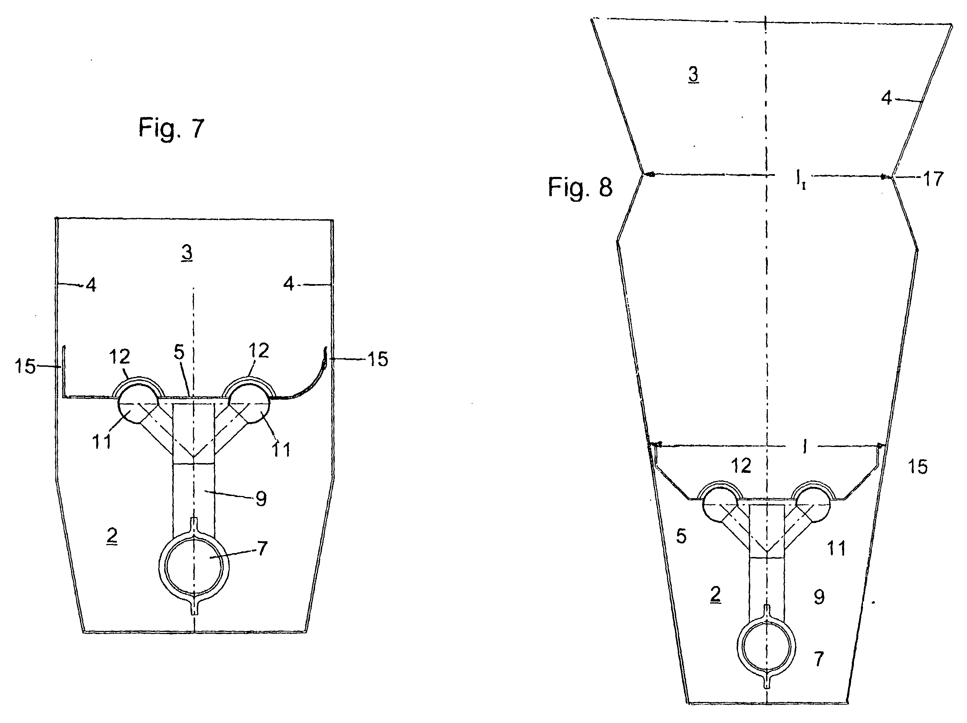

Wie in der Fig. 7 gezeigt ist, kann der Brennerboden 5 unterschiedliche Formen annehmen. Der den Seitenwänden 4 des Brennraums 3 zugewandte Teil des Brennerbodens 5 kann, wie rechts der Brennerlängsachse gezeigt, zum Luftkasten 2 hin konvex gewölbt oder, wie links der Brennerlängsachse gezeigt, eben ausgebildet sein. Der ebene Bodenteil kann senkrecht (Fig. 7) oder geneigt (Fig. 2) zur Längsachse des Brenners verlaufen.

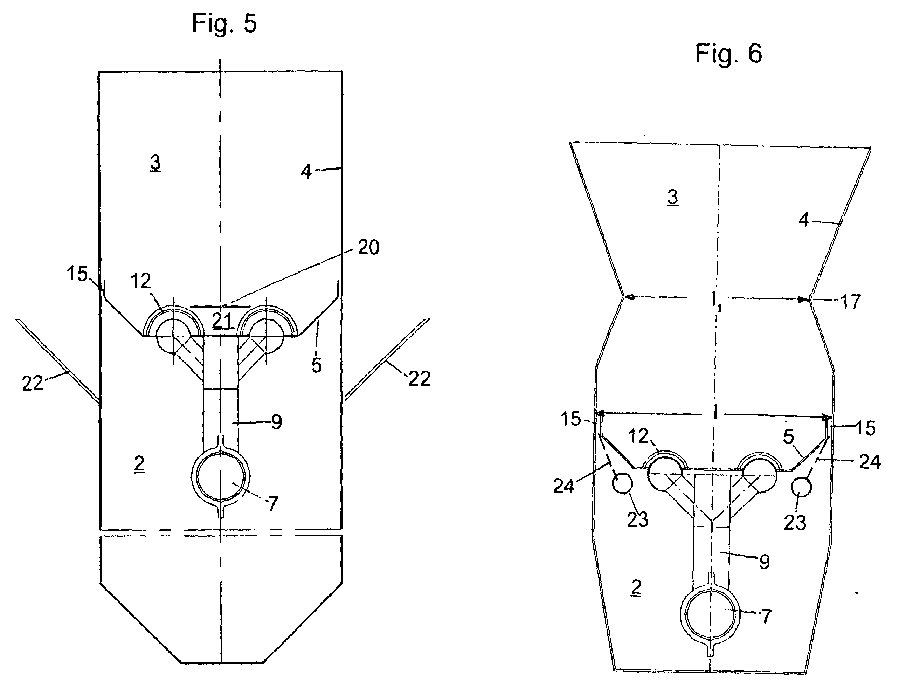

Die Seitenwände 4 des Brennraumes 3 können parallel zueinander verlaufen, so daß ein im Querschnitt rechteckiger Brennraum 3 entsteht (Fig. 5). Die Seitenwände 4 können auch in einem Winkel α derart zueinander stehen, daß ein sich in Strömungsrichtung des Brenngases konisch erweiternder Brennraum 3 gebildet wird (Fig. 2). Der Winkel α beträgt bis zu 30°, vorzugsweise 20°. Die Seitenwände 4 des Brennraumes 3 können auch mit einer Einschnürung 17 versehen sein. Dabei beträgt das Verhältnis der Breite 1₁ des Brennraumes 2 in der Ebene der Einschnürung 17 zu der Breite 1 des Brennraumes 3 in der Ebene des Austrittsquerschnittes der Schlitze 15 bei geraden Seitenwänden 0,6 bis 0,9 zu 1 (Fig. 6) und bei sich diffusorartig öffnenden Seitenwänden 0,9 bis 1,25 zu 1.

Die durch den Schlitz 15 austretende Luft muß in den Brennraum 3 mit einem bestimmten Impuls eingeblasen werden, der von der Brennerleistung und dem Verhältnis von Brennstoff zu Verbrennungsluft abhängig ist. Um diesen Impuls einzustellen, soll der Schlitz 15 eine Breite s aufweisen, die in einem Verhältnis von 0,01 bis 0,1 zu 1 zu der Breite 1 des Brennraumes 3 in der Ebene des Austrittsquerschnittes des Schlitzes 15 steht.

Die durch den Schlitz 15 seitlich und stromabwärts von dem Brenngas eingeblasene Luft erzeugt einen Innenwirbel 18 beiderseits der Längsmittelebene des Brennraumes 3. In diesen Innenwirbel 18 mischen sich die aus den Gasdüsen 12 austretenden Gasstrahlen 19 ein. Durch diese Einmischung des Brenngases weist der Innenwirbel 18 im Vergleich mit der eingeblasenen Luft eine geringere Luftzahl auf. Damit liegen günstige Bedingungen für eine Unterdrückung des Bildung von Stickoxiden während der Verbrennung vor. Die Ausbildung und die Gestalt des Innenwirbels 18 läßt sich durch die Neigung der Seitenwände 4 des Brennraumes 3 und die Anordnung der Einschnürung 17 beeinflussen.

Gemäß Fig. 5 ist innerhalb des Brennraumes 3 ein Mischaufsatz vorgesehen. Dieser Mischaufsatz besteht aus einer Platte 20, die zwischen den Gasdüsen 12 in einem Abstand von dem Brennerboden 5 angeordnet ist. Zwischen den Außenkanten der Platte 20 und Gasdüsen 12 verbleibt jeweils ein Spalt, so daß ein zu dem Brennraum 3 hin offener Luftraum 21 gebildet ist. Der Luftraum 21 steht mit dem Luftkasten 2 in Verbindung. Auf diese Weise wird ein Teil der Verbrennungsluft direkt dem Brenngas zugeführt und so eine Vormischung herbeigeführt.

Gemäß Fig. 5 sind außen an dem Luftkasten 2 Flügel 22 angebracht, die schräg in Richtung des in dem Kanal 1 strömenden Gases angestellt sind und aus geschlossenen oder gelochten Blechen bestehen. Die Flügel 22 können auch an den Seitenwänden 4 des Brennraumes 3 angeordnet werden. Die Flügel 22 können abschnittsweise von außen verstellt werden, um so den freien Querschnitt zwischen mehreren Kanalbrennern oder zwischen einem Kanalbrenner und der Kanalwand verändern zu können. Die Flügel können zwischen 0° und 180° geschwenkt werden.

Zur weiteren Verminderung der Bildung von Stickoxiden kann in an sich bekannter Weise Wasserdampf zur Minderung der Flammentemperatur eingeblasen werden. Der Dampf wird kurz vor Eintritt der Verbrennungsluft in die Schlitze 15 in die Luft eingedüst. Dies geschieht bei dem beschriebenen Kanalbrenner in der Art, daß in dem Luftkasten 2 Dampf führende Dampfrohre 23 angeordnet sind (Fig. 6). Diese Dampfrohre 23 sind mit Austrittsdüsen versehen, deren Achsen 24 auf den Eintrittsquerschnitt der Schlitze 15 ausgerichtet sind.

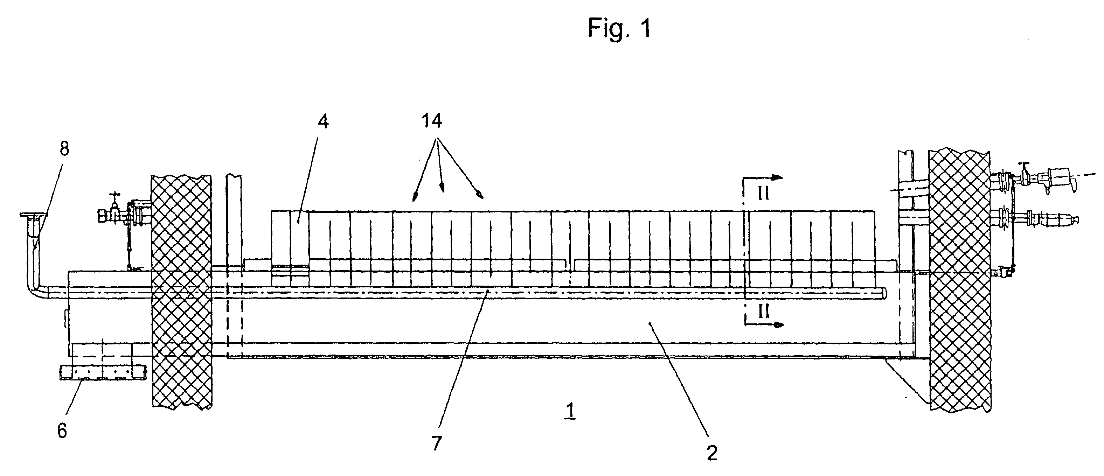

Gemäß Fig. 4 sind in dem Schlitz 15 mit seitlichem Abstand voneinander eine Reihe von vorzugsweise ebenen Blechen 25 angeordnet, die den Schlitz 15 quer zu dessen Längserstreckung durchdringen und in Richtung der Brennerlängsachse A verlaufen. Diese Bleche 25 wirken als Gleichrichter und lenken die aus dem Luftkasten 2 in die Schlitze 15 eintretende Luft in die senkrechte Richtung um. Auf diese Weise wird erreicht, daß die Luft gleichmäßig auf alle Einzelbrenner 14 (Fig. 1) verteilt wird. Ist der Schlitz 15, wie in Fig. 3 gezeigt, durch eine Trennwand 16 in zwei parallele Teilschlitze aufgeteilt, so empfiehlt es sich die der Gleichrichtung dienenden Bleche 25 oberhalb des Austrittsquerschnittes dieses Schlitzes im wandnahen Bereich des Brennraumes 3 anzubringen.

## Patentansprüche

1. Kanalbrenner zum Aufheizen eines strömenden Gases, der innerhalb eines das Gas führenden Kanals (1) angeordnet und mit einem Luftkasten (2) und einem Brennraum (3) versehen ist, die durch einen Brennerboden (5) voneinander getrennt sind, wobei der Luftkasten (2) mit einer Luftzuführung (6) verbunden, und der Brennerboden (5) mit Luftdurchtrittsöffnungen versehen ist, die als Schlitze (15) ausgebildet und nahe einer Seitenwand (4) des Brennraumes (3) angeordnet sind, wobei durch den Luftkasten (2) ein Gasführungsrohr (7) geführt ist, das mit einer oder mehreren Gasdüsen (12) verbunden ist, die mit in den Brennraum (3) mündenden Düsenbohrungen (13) versehen sind, wobei der Austrittsquerschnitt der Schlitze (15) seitlich von den Düsenbohrungen (13) der Gasdüsen (12) vorgesehen ist, **dadurch gekennzeichnet, daß** der Austrittsquerschnitt der Schlitze (15) in Strömungsrichtung des in den Brennraum (3) eingeleiteten Brenngases in einem Abstand hinter den Düsenbohrungen (13) der Gasdüsen (12) sich befindet, daß sich die Schlitze (15) in eine Richtung parallel zu den Seitenwänden (4) des Brennraumes (3) erstrecken und daß das Verhältnis der Breite s der Schlitze (15) zu der Breite 1 des Brennraumes (3) in Höhe des Austrittsquerschnittes der Schlitze (15) 0,01 bis 0,1 zu 1 beträgt, wobei beiderseits der Längsmittelebene des Brennraumes (3) Innenwirbel gebildet werden, in die sich die aus den Gasdüsen (12) austretenden Brenngasstrahlen so einmischen, daß die Innenwirbel im Vergleich mit der eingeblasenen Luft eine geringere Luftzahl aufweisen.

2. Kanalbrenner nach Anspruch 1, **dadurch gekennzeichnet, daß** der Brennraum (3) mit Seitenwänden (4) versehen ist, die sich in Strömungsrichtung des in den Brennraum (3) eingeleiteten Gases konisch erweitern.

3. Kanalbrenner nach Anspruch 1, **dadurch gekennzeichnet, daß** der Brennraum (3) mit parallelen Seitenwänden (4) versehen ist.

4. Kanalbrenner nach einem der Ansprüche 1 bis 3, **dadurch gekennzeichnet, daß** die Seitenwänden (4) des Brennraumes (3) mit einer Einschnürung (17) versehen sind und daß die Breite 1₁ des Brennraumes (3) in Höhe der Einschnürung (17) zu der Breite l des Brennraumes (3) in Höhe des Austrittsquerschnittes des Schlitzes (15) bei parallelen Seitenwänden (4) 0,6 bis 0,9 und bei sich diffusorartig öffnenden Seitenwänden (4) 0,9 bis 1,25 zu 1 beträgt.

5. Kanalbrenner nach einem der Ansprüche 1 bis 4, **dadurch gekennzeichnet, daß** der Schlitz (15) auf seiner Außenseite jeweils durch eine der Seitenwände (4) des Brennraumes (3) begrenzt ist.

6. Kanalbrenner nach einem der Ansprüche 1 bis 4, **dadurch gekennzeichnet, daß** der Schlitz (15) in dem Brennerboden (5) angeordnet ist.

7. Kanalbrenner nach einem der Ansprüche 1 bis 6, **dadurch gekennzeichnet, daß** sich der Schlitz (15) nach außen in Richtung auf die Seitenwände (4) des Brennraumes (3) erstreckt.

8. Kanalbrenner nach einem der Ansprüche 1 bis 7, **dadurch gekennzeichnet, daß** in dem Schlitz (15) quer zu dessen Längserstreckung Bleche (25) angeordnet sind, die in Richtung der Brennerlängsachse (A) verlaufen.

9. Kanalbrenner nach einem der Ansprüche 1 bis 7, **dadurch gekennzeichnet, daß** in dem wandnahen Bereich des Brennnraumes (3) oberhalb des Austrittsquerschnittes der Schlitze (15) Bleche (25) angeordnet sind, die in Richtung der Brennerlängsachse (A) und quer zur Seitenwand (4) verlaufen.

10. Kanalbrenner nach einem der Ansprüche 1 bis 9, **dadurch gekennzeichnet, daß** der Schlitz (15) durch eine oder mehrere, sich in Längsrichtung des Schlitzes (15) erstreckende Trennwände (16) in mehrere parallele Teilschlitze aufgeteilt ist.

11. Kanalbrenner nach einem der Ansprüche 1 bis 10, **dadurch gekennzeichnet, daß** unter Bildung eines Luftraumes (21) in einem Abstand oberhalb des Brennerbodens (5) und unter Bildung jeweils eines Spaltes in einem Abstand von den Gasdüsen (12) eine Platte (20) angeordnet ist und daß der Luftraum (21) mit dem Luftkasten (2) in Verbindung steht.

12. Kanalbrenner nach einem der Ansprüche 1 bis 11, **dadurch gekennzeichnet, daß** der den Seitenwänden (4) des Brennraums (3) benachbarte Teil des Brennerbodens (5) gewölbt ist.

13. Kanalbrenner nach einem der Ansprüche 1 bis 11, **dadurch gekennzeichnet, daß** der den Seitenwänden (4) des Brennraums (3) benachbarte Teil des Brennerbodens (5) eben ist und geneigt oder senkrecht zu der Längsachse des Kanalbrenners verläuft.

14. Kanalbrenner nach einem der Ansprüche 1 bis 13, **dadurch gekennzeichnet, daß** außen an dem Luftkasten (2) oder den Seitenwänden (4) des Brennraumes (3) schräg in Strömungsrichtung des aufzuheizenden Gases angestellte, von außen verstellbare Flügel (22) angebracht sind.

15. Kanalbrenner nach einem der Ansprüche 1 bis 14, **dadurch gekennzeichnet, daß** innerhalb des Luftkastens (2) Dampf führende Dampfrohre (23) angeordnet sind, die mit Austrittsbohrungen versehen sind, deren Achse (24) auf den Eintrittsquerschnitt des Schlitzes (15) gerichtet ist.

16. Verfahren zum Aufheizen eines in einem Kanal (1) strömenden Gases unter Verwendung eines Kanalbrenners gemäß einem der Ansprüche 1 bis 15, **dadurch gekennzeichnet, daß** die Luft zur Verbrennung des Brenngases in einem Abstand von der Aufgabe des Brenngases längs und quer zur Strömungsrichtung des Brenngases derart aufgegeben wird, daß die Luft an der Seitenwand (4) entlang strömt und Innenwirbel (18) beiderseits der Längsmittelebene des Brennraumes (3) bildet, in die sich die aus den Gasdüsen (12) austretenden Brenngasstrahlen so einmischen, daß die Innenwirbel (18) im Vergleich mit der eingeblasenen Luft eine geringere Luftzahl aufweisen.

## Claims

1. Duct burner for heating up a flowing gas, which is arranged within a channel 1 conducting the gas and is provided with an air box (2) and a combustion chamber (3), which are separated from one another by a burner base (5), wherein the air box (2) is connected with an air feed (6) and the burner base (5) is provided with air passage openings, which are formed as slots (15) and arranged in the vicinity of the slide wall (4) of the combustion chamber (3), wherein a gas conduit pipe (7), which is connected with one or more gas nozzles (12) provided with nozzle bores (13) opening into the combustion chamber (3), is led through the air box (2), wherein the outlet cross-section of the slots (15) is provided laterally of the nozzle bores (13) of the gas nozzles (12), **characterised in that** the outlet cross-section of the slots (15) is disposed at a spacing behind the nozzle bores (13) of the gas nozzles (12) in the flow direction of the combustion gas introduced into the combustion chamber (3), that the slots (15) extend in a direction parallel to the side walls (4) of the combustion chamber (3) and that the ratio of the width s of the slots (15) to the width I of the combustion chamber (3) at the level of the outlet cross-section of the slots (15) amounts to 0.01 - 0.1 to 1, wherein internal eddies are formed at both sides of the longitudinal centre plane of the combustion chamber (3), in which the combustion gas jets issuing from the gas nozzles (12) are so mixed in that the internal eddies have a lower air number by comparison with the injected air.

2. Duct burner according to claim 1, **characterised in that** the combustion chamber (3) is provided with side walls (4) which conically widen in the flow direction of the gas introduced into the combustion chamber (3).

3. Duct burner according to claim 1, **characterised in that** the combustion chamber (3) is provided with parallel side walls (4).

4. Duct burner according to one of claims 1 to 3, **characterised in that** the side walls (4) of the combustion chamber (3) are provided with a constriction (17) and that the width I₁ of the combustion chamber (3) at the level of the constriction (17) relative to the width I of the combustion chamber (3) at the level of the outlet cross-section of the slot (15) amounts to 0.6 - 0.9 to 1 in the case of parallel side walls (4) and 0.9 - 1.25 to 1 in the case of side walls (4) opening in the manner of a diffusor.

5. Duct burner according to one of claims 1 to 4, **characterised in that** the slot (15) is bounded on its outer side in each instance by one of the side walls (4) of the combustion chamber (3).

6. Duct burner according to one of claims 1 to 4, **characterised in that** the slot (15) is arranged in the burner base (5).

7. Duct burner according to one of claims 1 to 6, **characterised in that** the slot (15) extends outwardly in direction towards the side walls (4) of the combustion chamber (3).

8. Duct burner according to one of claims 1 to 7, **characterised in that** plates (25), which extend in the direction of the burner longitudinal axis (A), are arranged in the slot (15) transversely to the longitudinal extent thereof.

9. Duct burner according to one of claims 1 to 7, **characterised in that** plates (25), which extend in the direction of the burner longitudinal axis (A) and transversely to the side wall (4), are arranged in the region of the combustion chamber (3) in the vicinity of the wall and above the outlet cross-section of the slot (15).

10. Duct burner according to one of claims 1 to 9, **characterised in that** the slot (15) is divided into several parallel part slots by one or more partition walls (16) extending in the longitudinal direction of the slot (15).

11. Duct burner according to one of claims 1 to 10, **characterised in that** a plate (20) is arranged at a spacing above the burner base (5) while forming an air chamber (21) and at a spacing from each of the gas nozzles (12) whilst forming a respective gap and that the air chamber (21) is connected with the air box (2).

12. Duct bumer according to one of claims 1 to 11, **characterised in that** the part of the burner base (5) adjacent to the side walls (4) of the combustion chamber (3) is arched.

13. Duct burner according to one of claims 1 to 11, **characterised in that** the part of the burner base (5) adjacent to the side walls (4) of the combustion chamber (3) is flat and extends at an inclination or perpendicularly relative to the longitudinal axis of the duct burner.

14. Duct burner according to one of claims 1 to 13, **characterised in that** externally adjustable vanes (22) set obliquely in the flow direction of the gas to be heated are mounted externally at the air box (2) or the side walls (4) of the combustion chamber (3).

15. Duct burner according to one of claims 1 to 14, **characterised in that** steam pipes (23) conducting steam are arranged within the air box (2) and are provided with outlet bores, the longitudinal axis (24) of which is oriented towards the inlet cross-section of the slot (15).

16. Method of heating a gas, which is flowing in a channel (1), with use of a duct burner according to one of claims 1 to 15, **characterised in that** the air for combustion of the combustion gas is delivered at a spacing from the delivery of the combustion gas longitudinally of and transversely to the flow direction of the combustion gas in such a manner that the air flows along at the side wall (4) and forms internal eddies (18) at both sides of the longitudinal centre plane of the combustion chamber (3), in which the combustion gas jets issuing from the gas nozzles (12) are so mixed in that the internal eddies (18) have a smaller air number by comparison with the injected air.

## Revendications

1. L'invention concerne un brûleur pour canal permettant de chauffer un gaz qui s'écoule, qui est placé dans un canal (1) acheminant le gaz à chauffer et comporte un caisson à air (2) et un foyer (3), séparés l'un de l'autre par un fond de brûleur (5). Le caisson à air (2) est relié à une canalisation d'amenée d'air (6) et le fond du brûleur (5) est pourvu d'orifices de sortie d'air se présentant sous forme de fentes (15), pratiquées à proximité d'une paroi latérale (4) du foyer (3). Un tuyau d'amenée du gaz (7) est guidé à travers le caisson à air (2) et est relié à une ou à plusieurs tuyères à gaz (12) munies d'alésages (13) débouchant dans le foyer (3). La section transversale de sortie des fentes (15) est prévue à côté des alésages (13) des tuyères à gaz (12). Ledit brûleur pour canal se **caractérise en ce que** la section transversale de sortie des fentes (15) se situe derrière les alésages (13) des tuyères à gaz (12) dans le sens d'écoulement du gaz combustible introduit dans le foyer (3). Dans un sens, les fentes (15) s'étendent parallèlement aux parois latérales (4) du foyer (3). Le rapport de la largeur s des fentes (15) à la largeur 1 du foyer (3), à la hauteur de la section transversale de sortie des fentes (15) est de l'ordre de 0,01 à 0,1 : 1. des tourbillonnements intérieurs sont formés de part et d'autre de l'axe médian longitudinal du foyer (3). Des jets de gaz combustible sortant des tuyères à gaz (12) se mêlent à ces tourbillonnements, de manière que lesdits tourbillonnements présentent un indice d'air en excès moindre comparativement à celui de l'air injecté par soufflage.

2. Brûleur pour canal selon la revendication 1, **caractérisé en ce que** le foyer (3) est muni de parois latérales (4) qui s'évasent en cône dans le sens d'écoulement du gaz introduit dans le foyer (3).

3. Brûleur pour canal selon la revendication 1, **caractérisé en ce que** le foyer (3) est muni de parois latérales (4) parallèles.

4. Brûleur pour canal selon une des revendications 1 à 3, **caractérisé en ce que** les parois latérales (4) du foyer (3) sont munies d'une striction (17) et en ce que le rapport de la largeur 1₁ du foyer (3), à la hauteur de la section transversale de sortie de la fente (15), en cas de parois latérales (4) parallèles est de 0,6 à 0,9 : 1 et en cas de parois latérales (4) s'ouvrant en diffuseur, de l'ordre de 0,9 à 1,25 : 1.

5. Brûleur pour canal selon une des revendications 1 à 4, **caractérisé en ce que** la fente (15) est délimitée sur sa face extérieure dans chaque cas par une des parois latérales (4) du foyer (3).

6. Brûleur pour canal selon une des revendications 1 à 4, **caractérisé en ce que** la fente (15) est pratiquée dans le fond du brûleur (5).

7. Brûleur pour canal une des revendications 1 à 6, **caractérisé en ce que** la fente (15) s'étend vers l'extérieur en direction des parois latérales (4) du foyer (3).

8. Brûleur pour canal selon une des revendications 1 à 7, **caractérisé en ce que** des tôles (25) s'étendant en direction de l'axe longitudinal du brûleur (A), sont disposées dans la fente (15), transversalement au sens longitudinal dans lequel elle s'étend.

9. Brûleur pour canal selon une des revendications 1 à 7, **caractérisé en ce que** des tôles (25) s'étendant en direction de l'axe longitudinal du brûleur (A) et transversalement à la paroi latérale (4), sont disposées dans la zone du foyer (3), proche de la paroi, au-dessus de la section transversale de sortie des fentes (15).

10. Brûleur pour canal selon une des revendications 1 à 9, **caractérisé en ce que** la fente (15) est répartie en plusieurs fentes partielles par une ou plusieurs parois de séparation (16) s'étendant dans le sens longitudinal de la fente (15).

11. Brûleur pour canal selon une des revendications 1 à 10, **caractérisé en ce qu'**il est prévu une plaque (20) montée de manière à former un espace à air (21) à distance au-dessus du fond du brûleur (5) et, dans chaque cas, un espace à distance des tuyères à gaz (12), afin que l'espace à air (21) communique avec le caisson à air (21).

12. Brûleur pour canal selon une des revendications 1 à 11, **caractérisé en ce que** la partie du fond du brûleur (5) qui est adjacente aux parois latérales (4) du foyer (3) est cintrée.

13. Brûleur pour canal selon une des revendications 1 à 11, **caractérisé en ce que** la partie du fond du brûleur (5) qui est adjacente aux parois latérales (4) du foyer (3) est plane et s'étend inclinée ou perpendiculaire à l'axe longitudinal du brûleur pour canal.

14. Brûleur pour canal selon une des revendications 1 à 13, **caractérisé en ce que** des ailettes (22) déplaçables depuis l'extérieur sont montées à l'extérieur sur le caisson à air (2) ou sur les parois latérales (4) du foyer (3), de manière inclinée dans le sens d'écoulement du gaz à chauffer.

15. Brûleur pour canal selon une des revendications 1 à 14, **caractérisé en ce que** des conduits de vapeur (23) acheminant de la vapeur sont disposés à l'intérieur du caisson à air (2) et présentent des orifices de sortie dont l'axe (24) est aligné sur la section transversale d'entrée de la fente (15).

16. L'invention concerne un procédé permettant de chauffer un gaz s'écoulant dans un canal (1), au moyen d'un brûleur pour canal selon une des revendications 1 à 15. Ce procédé se **caractérise en ce que** l'alimentation de l'air destiné à la combustion du gaz combustible est assurée à distance de l'alimentation du gaz combustible, le long du sens d'écoulement dudit gaz combustible et transversalement à lui. L'air s'écoule le long de la paroi latérale et forme des tourbillonnements intérieurs (18) de part et d'autre du plan médian longitudinal du foyer (3), auxquels les jets de gaz combustible qui sortent des tuyères à gaz (12) se mêlent, de manière que les tourbillonnements intérieurs (18) présentent un indice d'air en excès moindre comparativement à ce lui de l'air injecté par soufflage.
